(19) **Europäisches Patentamt European Patent Office Office européen des brevets**

(11) **EP 4 716 281 A1**

(12) **EUROPEAN PATENT APPLICATION**

(43) Date of publication:
25.03.2026 Bulletin 2026/13

(21) Application number: 25202351.0

(22) Date of filing: 16.09.2025

(51) International Patent Classification (IPC):
*H04W 24/02* (2009.01)    *H04W 84/12* (2009.01)

(52) Cooperative Patent Classification (CPC):
**H04W 24/02; H04W 84/12**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 20.09.2024 US 202463697152 P
27.06.2025 US 202519253463

(71) Applicant: **Juniper Networks, Inc.**
**Sunnyvale, CA 94089-1206 (US)**

(72) Inventors:
• LIN, May Zar
  Sunnyvale, 94089 (US)
• WANG, Wenfeng
  Sunnyvale, 94089 (US)
• THOMAS, Jacob
  Sunnyvale, 94089 (US)

(74) Representative: **D Young & Co LLP**
**3 Noble Street**
**London EC2V 7BQ (GB)**

(54) **AUTOMATED ACCESS POINT RADIO RECONFIGURATION**

(57) Techniques are described for a system comprising memory and one or more processors in communication with the memory. The one or more processors may be configured to obtain network data of a plurality of access point (AP) devices at a site. The one or more processors may further be configured to determine a capacity on a first radio band for an AP device of the plurality of AP devices. The one or more processors may further be configured to determine an availability associated with the first radio band with respect to one or more neighboring AP devices of the AP device. The one or more processors may further be configured to perform, based on the capacity and the availability, an action.

FIG. 1A

## Description

This application claims the benefit of US Patent Application No. 19/253,463, filed 27 June 2025, which claims the benefit of US Provisional Patent Application No. 63/697,152, filed 20 September 2024, the entire content of each application is incorporated herein by reference.

## TECHNICAL FIELD

The disclosure relates generally to computer networks and, more specifically, to monitoring and troubleshooting computer networks.

## BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies.

Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network. In the case of a client device running a cloud-based application, such as voice over Internet Protocol (VOIP) applications, streaming video applications, gaming applications, or video conference applications, data is exchanged during an application session from the client device through one or more APs and one or more wired network devices, e.g., switches, routers, and/or gateway devices, to reach the cloud-based application server.

## SUMMARY

In general, this disclosure describes one or more techniques for optimizing access point (AP) radio configurations within a site. APs may include two radios that enable dual-band coverage (e.g., a 2.4GHz radio band and 5GHz radio band), three radios that enable tri-band coverage (e.g., a 2.4GHz radio band, 5GHz radio band, and 6GHz radio band), and so on. An AP may be configured (e.g., via an administrator user interface) to operate its two or more radios in any combination of radio bands. For example, an AP may include two or more radios that may each be configured to operate in a 2.4 GHz radio band, in a 5GHz radio band, in a 6GHz radio band, or combinations thereof.

Each radio of an AP may be assigned a channel of a radio band in which the AP is operating. In instances where an AP has two radios operating in the same radio band, the AP radios may be configured to occupy different channels associated with the radio band. For example, an AP may have a first radio operating on a first channel of a radio band and a second radio operating on a second channel of the same radio band. Two or more APs within communication range at a site may experience interference and/or congestion in instances where each of the two or more APs have radios operating on the same channel of the same radio band.

In some examples, a radio of an AP may be configured to automatically convert to a different radio band based on whether there is excessive coverage within an initial radio band in which the radio of the AP is currently operating. In other words, a radio may convert from a first radio band to a second radio band based on a determination that there is more than a threshold number of radios operating at the first radio band in a cluster or neighborhood of APs. However, such conventional automatic radio conversion techniques do not consider whether there is a need for additional radios operating on the second radio band or whether there are available channels in the second radio band within the cluster or neighborhood of APs on which an additional radio could operate. Automatically converting a radio of an AP to the second radio band when there is not an available channel in the second radio band may result in interference with radios of APs within the cluster or neighborhood of APs operating on the second radio band and/or cause congestion when handling network traffic of client devices.

A network management system, according to the techniques described herein, may optimize automated AP radio configurations according to capacity of AP radios and availability associated with various radio bands within a site. For example, the network management system may obtain network data of AP radio utilization for a plurality of APs at a site. The network management system may process the network data to determine capacity on each radio band for each AP of the plurality of APs within the site. For example, the network management system may determine a capacity value indicating whether there is insufficient or surplus capacity on a first radio band for an AP radio. In one example, the network management system may determine that there is insufficient capacity on the first radio band for an AP radio based on a quantity of traffic sent and received by the AP radio and/or a number of clients attempting to connect to the AP radio on the first radio band exceeding a limit of what the AP radio can support on the first radio band. An AP radio operating on a radio band with insufficient capacity may result in package loss, high latency, slow speeds, competing resources, or other network issues decreasing a user network experience. In another example, the network management system may determine that there is surplus capacity on the first radio band for the AP based on the quantity of traffic sent and received by the AP and/or the number of clients attempting to connect to the AP on the first radio band being below a threshold. An AP radio operating on a radio band with surplus capacity may result in inefficient AP radio utilization within the site.

The network management system may determine availability associated with radio bands to determine whether AP radios operating in a first radio band may be converted or reconfigured to operate in a second radio band. For example, the network management system may determine a channel availability associated with the first radio band to determine whether an AP radio within a cluster of APs may be reconfigured to operate in the first radio band to assist one or more other AP radios within the cluster of APs that are operating in the first radio band and have been flagged as having insufficient capacity. The network management system may, additionally or alternatively, determine an availability associated coverage of the cluster of APs operating in the second radio band to assess whether converting an AP radio of the cluster of APs to operate in the first radio band may cause a coverage hole in the second radio band with respect to the cluster of APs.

The network management system may perform an action to optimize AP radio utilization in a site based on capacity values determined for each radio band for each AP at the site and an availability associated with each radio band with respect to neighboring AP devices within a communication range at the site. The network management system may perform an action such as changing a bandwidth of a first radio band for at least one AP at the site or converting a radio of at least one AP at the site from operating at a second radio band to operate at the first radio band based on capacity values and availability determined for the first and second radio bands for the AP and any neighboring APs. As one example, the network management system may increase the bandwidth of the first radio band for one or more APs within a cluster or neighborhood of APs based on a need for more capacity (i.e., insufficient capacity) on the first radio band and a relatively high channel availability (e.g., two or more available channels) on the first radio band within the cluster. As another example, the network management system may decrease the bandwidth of the first radio band for one or more APs within a cluster or neighborhood of APs based on a need for more capacity (i.e., insufficient capacity) on the first radio band and no channel availability on the first radio band within the cluster. As a further example, the network management system may convert an AP radio of the AP operating at a second radio band to operate at the first radio band based on a need for more capacity (i.e., insufficient capacity) on the first radio band and some channel availability (e.g., at least one available channel) on the first radio band within the cluster. In this example, the network management system may also consider whether the second radio band has surplus capacity such that a coverage hole will not be created at the second radio band if the AP radio is converted to operate on the first radio band.

In one example, A system comprises memory; and one or more processors in communication with the memory and configured to: obtain network data of a plurality of access point (AP) devices at a site; determine a capacity on a first radio band for an AP device of the plurality of AP devices; determine an availability associated with the first radio band with respect to one or more neighboring AP devices of the AP device; and perform, based on the capacity and the availability, an action.

In another example, A method comprises obtaining, by a system, network data of a plurality of access point (AP) devices at a site; determining, by the system, a capacity on a first radio band for an AP device of the plurality of AP devices; determining, by the system, an availability associated with the first radio band with respect to one or more neighboring AP devices of the AP device; and performing, by the system, based on the capacity and the availability, an action.

In yet another example, computer readable media comprises instructions that, when executed, cause one or more processors to: obtain network data of a plurality of access point (AP) devices at a site; determine a capacity on a first radio band for an AP device of the plurality of AP devices; determine an availability associated with the first radio band with respect to one or more neighboring AP devices of the AP device; and perform, based on the capacity and the availability, an action.

The details of one or more examples of the techniques of this disclosure are set forth in the accompanying drawings and the description below. Other features, objects, and advantages of the techniques will be apparent from the description and drawings, and from the claims.

BRIEF DESCRIPTION OF DRAWINGS

FIG. 1A is a block diagram of an example network system including a network management system, in accordance with one or more techniques of the disclosure.

FIG. 1B is a block diagram illustrating further example details of the network system of FIG. 1A.

FIG. 2 is a block diagram of an example access point device, in accordance with one or more techniques of this disclosure.

FIG. 3 is a block diagram of an example network management system, in accordance with one or more techniques of the disclosure.

FIG. 4 is a block diagram of an example user equipment device, in accordance with one or more techniques of this disclosure.

FIG. 5 is a block diagram of an example network node, such as a router or switch, in accordance with one or more techniques of this disclosure.

FIG. 6 illustrates an example headroom map, in accordance with one or more techniques of this disclosure.

FIG. 7 illustrates an example cluster or neighborhood of access points, in accordance with one or more techniques of this disclosure.

FIG. 8. is a flow chart illustrating an example operation of automated access point radio reconfiguration, in accordance with one or more techniques of this disclosure.

FIG. 9 is a conceptual diagram illustrating an example radio resource manager configured to automatically determine radio configurations, in accordance with one or more techniques of this disclosure.

FIG. 10 is a conceptual diagram illustrating example logic for labeling network devices as part of an example reinforcement learning scheme associated with a machine learning model predicting information for automated radio configurations, in accordance with one or more techniques of this disclosure.

## DETAILED DESCRIPTION

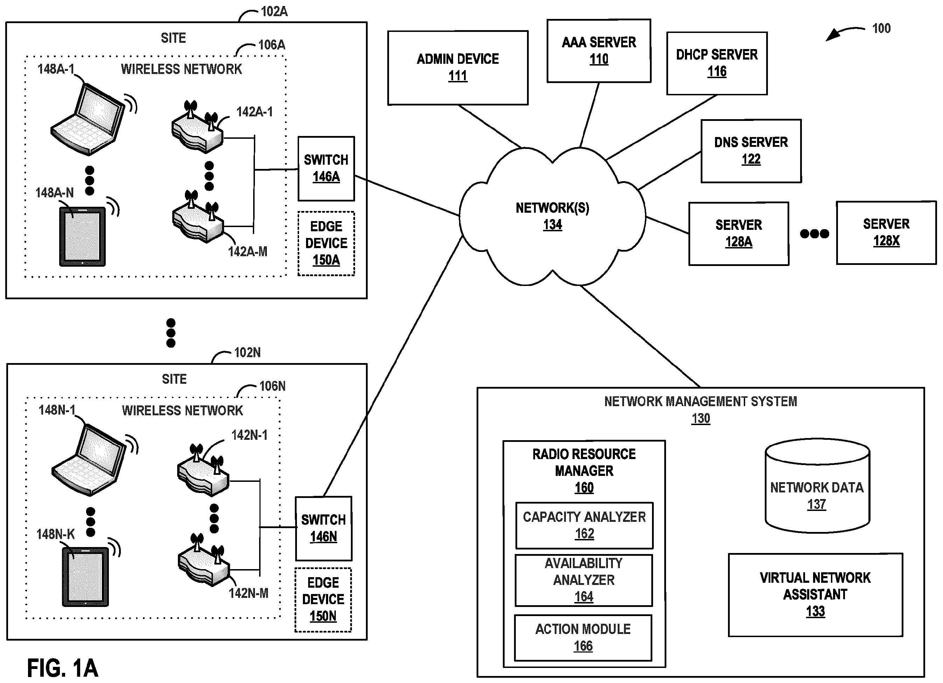

FIG. 1A is a block diagram of an example network system 100 including network management system (NMS) 130, in accordance with one or more techniques of this disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of network access server (NAS) devices, such as access points (APs) 142, switches 146, or routers (not shown). For example, site 102A includes a plurality of APs 142A-1 through 142A-M. Similarly, site 102N includes a plurality of APs 142N-1 through 142N-M. Each AP 142 may be any type of wireless access point, including, but not limited to, a commercial or enterprise AP, a router, or any other device that is connected to a wired network and is capable of providing wireless network access to client devices within the site.

Each site 102A-102N also includes a plurality of client devices, otherwise known as user equipment devices (UEs), referred to generally as UEs or client devices 148, representing various wireless-enabled devices within each site. For example, a plurality of UEs 148A-1 through 148A-K are currently located at site 102A. Similarly, a plurality of UEs 148N-1 through 148N-K are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which each of APs 142A-1 through 142A-M at site 102A are connected. Similarly, site 102N includes a switch 146N to which each of APs 142N-1 through 142N-M at site 102N are connected. Although illustrated in FIG. 1A as if each site 102 includes a single switch 146 and all APs 142 of the given site 102 are connected to the single switch 146, in other examples, each site 102 may include more or fewer switches and/or routers. In addition, the APs and the other wired client-side devices of the given site may be connected to two or more switches and/or routers. In addition, two or more switches at a site may be connected to each other and/or connected to two or more routers, e.g., via a mesh or partial mesh topology in a hub-and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128X (collectively "servers 128") (e.g., web servers, databases servers, file servers and the like), and a network management system (NMS) 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The administrator and admin device 111 may comprise IT personnel and an administrator computing device associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the NAS devices, e.g., APs 142, switches 146, or routers, may connect to edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices while using NMS 130 and its distributed software architecture for scalable and resilient operations, management, troubleshooting, and analytics.

Each one of the network devices of network system 100, e.g., servers 110, 116, 122 and/or 128, APs 142, UEs 148, switches 146, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 142, UEs 148, and switches 146, may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

In some examples, NMS 130 monitors network data 137, e.g., one or more service level expectation (SLE) metrics, received from wireless networks 106A-106N at each site 102A-102N, respectively, and manages network resources, such as APs 142 at each site, to deliver a high-quality wireless experience to end users, IoT devices and clients at the site. For example, NMS 130 may include a virtual network assistant (VNA) 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 137 from sensors and/or agents associated with APs 142 and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

In operation, NMS 130 observes, collects and/or receives network data 137, which may take the form of data extracted from messages, counters, and statistics, for example. In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network 134 (e.g., routers, switches, controllers, gateways, and the like).

Radio resource manager (RRM) 160 of NMS 130 may monitor one or more metrics for each site 102A-102N in order to learn and optimize the RF environment at each site. For example, RRM 160 may monitor coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM 160 may determine channel and transmit power distribution across all APs 142 in each network 106A-106N. For example, RRM 160 may monitor events, power, channel, bandwidth, and number of clients connected to each AP. RRM 160 may further automatically change or update configurations of one or more APs 142 at a site 102 with an aim to improve the coverage and capacity SLE metrics and thus to provide an improved wireless experience for the user.

In accordance with one or more techniques of this disclosure, NMS 130 is configured to optimize configurations of radios of APs 142 according to network data 137. RRM 160 of NMS 130 may analyze network data 137 to determine capacity values associated with each radio of APs 142 at a site 102. For instance, RRM 160 may determine, based on network data 137, that a radio of AP 142A-1 that is operating in a first radio band (e.g., 2.4 GHz, 5GHz, 6GHz, etc.), within site 102A has a capacity that is insufficient, excessive, or otherwise satisfies a threshold. RRM 160 may determine an availability associated with the first radio band within a cluster or neighborhood of AP 142A-1 of APs 142A at site 102A. For example, based on RRM 160 determining that a capacity of a radio of AP 142A-1 operating on the 5GHz radio band within site 102A satisfies a threshold (i.e., that the 5GHz radio band has insufficient capacity), RRM 160 may determine channel availability within the 5GHz radio band with respect to the cluster or neighborhood of APs 142A of AP 142A-1 to determine whether an additional AP radio operating on the 5Ghz radio band could be added to the cluster or neighborhood of APs to provide additional capacity without causing interference. RRM 160 may perform an action based on the determined capacity values and determined availability. RRM 160 may perform an action that optimizes configuration of AP radios of APs 142 within sites 102 such that coverage across various radio bands at each of sites 102 is sufficient and interference (e.g., channel interference, environmental interference, etc.) is minimized. For example, RRM 160 may optimize configurations of radios of APs 142 at one of sites 102 by automatically converting one or more radios of APs 142 to operate on a different radio band and/or automatically adjusting bandwidth of the radio band for one or more radios of APs 142. In general, RRM 160 may implement capacity analyzer 162, availability analyzer 164, and action module 166 to perform an analysis for each radio of each of APs 142 at sites 102 to identify APs that may have insufficient or surplus capacity in one or more radio bands, determine availability within the one or more radio bands, and perform an action of converting AP radios (including radios of flagged APs) to different radio bands and/or adjusting bandwidth at the one or more radio bands to optimize AP radio configurations.

In operation, capacity analyzer 162 of RRM 160 may determine or otherwise monitor capacity of radios of APs 142. Capacity analyzer 162 may determine a capacity of a radio for an AP of APs 142A at site 102A (e.g., AP 142A-1) that includes an indication of remaining capacity on a radio band. Capacity analyzer 163 may determine a capacity to include the indication based on a quantity of traffic sent and received by an AP (e.g., a transmission and receiving utilization of the AP radio), a number of client devices connected to an AP on a radio band (e.g., an indication of a number of client devices 148A connected to an AP radio during peak network usage hours), a reserved bandwidth utilization capacity, and/or other utilization metrics that may be stored as network data 137. For instance, capacity analyzer 162 may determine a capacity of an AP radio of an AP operating in a 5GHz radio band according to the following equation:

$$\text{CAPACITY} = 1 - U_{5\_tx\_rx} - f(\text{client\_count}) - U_{\text{reserved}}$$

where $U_{5\_tx\_rx}$ represents transmission and receiving utilization (e.g., percentage of utilization within a time period) of the AP radio operating the 5GHz radio band, f(client_count) represents a function of a number of client devices 148 connected to the AP radio during a predefined period of time (e.g., on the order of hours, days, or weeks), and $U_{\text{reserved}}$ represents a reserved utilization that may be predefined as a buffer. By subtracting utilization percentages of an AP radio operating in a radio band from one, capacity analyzer 162 may determine a capacity value for the AP radio in terms of a percentage of available utilization capacity. For example, capacity analyzer 162 may determine the AP has insufficient capacity (e.g., too many client devices 148 connecting to the AP throughout the predefined period of time) based on a negative capacity value. Capacity analyzer 162 may determine the AP has surplus or excessive capacity (e.g., not many client devices 148 connecting to the AP throughout the predefined period of time) based on a positive capacity value.

In some instances, capacity analyzer 162 may determine whether a capacity for a radio of an AP operating at a radio band satisfies one or more headroom thresholds. For example, capacity analyzer 162 may implement a first headroom threshold associated with insufficient capacity and a second headroom threshold associated with surplus capacity. Capacity analyzer 162 may send an indication to action module 166 indicating whether a capacity for a radio of an AP operating at the radio band satisfies the one or more headroom thresholds. In some examples, capacity analyzer 162 may send an indication to availability analyzer 164 that an AP of APs 142 has insufficient capacity at the radio band (e.g., the capacity value of the AP at the radio band satisfies the first headroom threshold) and/or an indication that an AP of APs 142 has surplus capacity at the radio band (e.g., the capacity value of the AP at the radio band satisfies the second headroom threshold).

Availability analyzer 164 of RRM 160 may determine an availability associated with a radio band within a neighborhood or cluster of APs 142 within one of sites 102. For example, availability analyzer 164 may receive, from capacity analyzer 162, an indication that AP 142A-1 has insufficient capacity or a need for resources at a first radio band, and/or an indication that AP 142A-1 has a surplus capacity or otherwise has a surplus of resources at a second radio band. Availability analyzer 164 may determine a cluster or a neighborhood of APs 142A within communication range of AP 142A-1 with radios that are operating in the first radio band and/or the second radio band. Availability analyzer 164 may determine the cluster of APs 142A within communication range of AP 142A-1 based on network data 137. For instance, availability analyzer 164 may determine that AP 142A-2 and AP 142A-3 are in a cluster of APs with AP 142A-1 based on received signal strength indicator (RSSI) values, stored as network data 137, between AP 142A-1 and AP 142A-2 and between AP 142A-1 and AP 142A-3 satisfying a threshold.

In one example, availability analyzer 164 may determine an availability in the first radio band to enable action module 166 to determine whether a radio of AP 142A-1 currently operating at the second radio band may be converted to operate at the first radio band to provide additional capacity at the first radio band without causing interference within the first radio band and without causing a coverage hold in the second radio band. In another example, availability analyzer 164 may determine an availability in the first radio band to enable action module 166 to determine whether a radio of at least one of APs 142A currently operating at the second radio band - and within the cluster of APs of AP 142A-1 - may be converted to operate at the first radio band to provide additional capacity at the first radio band without causing interference within the first radio band and without causing a coverage hold in the second radio band. In some examples, availability analyzer 164 may determine an availability in the second radio band to enable action module 166 to determine whether there would be a coverage hole if a radio of AP 142A-1 is converted to operate at the first radio band. In this way, availability analyzer 164 may determine whether AP radios operating in the second radio band may be converted to assist an AP radio that is operating in the first radio band that has been flagged as having insufficient capacity.

Availability analyzer 164 may determine an availability of a radio band within a cluster of APs 142 at one of sites 102 according to a number of available channels associated with the radio band and within the cluster of APs. Availability analyzer 164 may determine available channels associated with a radio band within a cluster of APs based on configured channels within the radio band for the cluster of APs, channel interference within the cluster of APs, a number of APs within the cluster, e.g., neighboring APs that have a signal strength above a threshold, or other channel information associated with the radio band that may be stored as network data 137. For instance, availability analyzer 164 may determine a number of available channels within a cluster of APs associated with a radio band according to the following equation:

$$C_{\text{available}} = \frac{C_{\text{config}} - C_{\text{interference}}}{n_{\text{strong\_ngh}} + 1}$$

where $C_{\text{config}}$ represents a number of total channels configured on the radio band, $C_{\text{interference}}$ represents a number of channels that have high levels of interference and thus are not usable by the APs, and $n_{\text{strong\_ngh}}$ represents a number of neighboring APs with respect to an AP (e.g., AP 142A-1) that is within a communication range of the AP (e.g., has RSSI values above a threshold). Availability analyzer 164 may send an indication to action module 166 that indicates a number of available channels associated with a radio band within the cluster of APs.

Action module 166 of RRM 160 may perform an action according to outputs of capacity analyzer 162 and/or availability analyzer 164. Action module 166 may perform an action of increasing bandwidth of a radio band for one or more APs based on available channels determined by availability analyzer 164. For example, in instances where there are greater than two available channels associated with a radio band (e.g., in instances where an AP determined to have insufficient capacity does not have many neighboring APs with radios operating in the same radio band), action module 166 may increase bandwidth of the radio band for one or more APs within the AP cluster. In another example, in instances where the radio band has no available channels, action module 166 may reduce bandwidth of the radio band for one or more APs within the AP cluster. Action module 166 may, additionally or alternatively, convert one or more radios within the cluster of APs from operating at a second radio band to operate at a first radio band based on insufficient capacity at the first radio band and available channels within the first radio band.

Action module 166 may determine which AP radio to convert from the second radio band to the first radio band based on capacity values of AP radios within the AP cluster determined by capacity analyzer 162. For example, action module 166 may determine to perform an action on AP 142A-1 based on a capacity determined for a first radio of AP 142A-1 operating at the first radio band exceeding a capacity determined for a second radio of AP 142A-1 operating at the second radio band and/or exceeding a capacity determined for radios of one or more neighboring APs of APs 142A operating at the second radio band and are within a communication range of AP 142A-1 (e.g., neighboring APs 142A of AP 142A-1). Action module 166 may determine a set of candidate APs within an AP cluster that have radios eligible to be converted from the second radio band to the first radio band. In some instances, action module 166 may label candidate APs or any subsets thereof as reserve APs and/or reserved AP radios. Action module 166 may determine which radios in the set of candidate APs may be converted to operate on the first radio band while avoiding coverage holes on the second radio band and/or avoiding interference in the first radio band. To determine which radio to select from the set of candidate APs, action module 166 may compute a band weight for each candidate AP. For instance, action module 166 may determine a band weight for a candidate AP with a radio operating in a 2.4GHz radio band that may be converted to a 5GHz radio band according to the following equation:

$$ w_{\text{band}} = 1 - CAPACITY - U_{24\_tx\_rx} - U_{24\_\text{client\_count}} + U_{24<-5\_\text{inter\_band}} $$

where CAPACITY represents a capacity value on the 5GHz radio band for the candidate AP determined by capacity analyzer 162, $U_{24\_tx\_rx}$ represents a transmission and receiving utilization value (e.g., percentage of utilization within a time period) on the 2.4GHz radio band for the candidate AP, $U_{24\_\text{client\_count}}$ represents utilization (e.g., percentage of utilization within a time period) associated with how many client devices 148 are connected to the candidate AP on the 2.4GHz radio band, and $U_{24<-5\_\text{inter\_band}}$ represents utilization (e.g., percentage of utilization within a time period) of client devices 148 that are connected to the candidate AP and are roaming from the 5GHz radio band to the 2.4GHz radio band due to insufficient capacity on the 5Ghz radio band.

Action module 166 may determine which radio of the candidate APs to convert to the first radio band based on band weights determined for each candidate AP. For example, action module 166 may remove a first candidate AP from the set of candidate APs based on comparing a first band weight computed for the first candidate AP to a second band weight computed for a second candidate AP. In some examples, action module 166 may select a predetermined number of candidate APs from the set of candidate APs that have band weights that satisfy a threshold and/or based on comparisons of band weights for each of the candidate APs. Action module 166 may configure radios of the remaining or selected candidate APs to operate in the second radio band.

In some examples, action module 166 may determine a radio of an AP in a cluster of APs is not needed to provide coverage at a site. For example, based on action module 166 receiving, from capacity analyzer 162, an indication that AP 142A-1 has surplus or adequate capacity at all radio bands, action module 166 may convert a radio of AP 142A-1 to operate as a dedicate scanning or monitoring radio.

In some instances, action module 166 may generate a recommendation based on outputs of capacity analyzer 162 and availability analyzer 164. For example, based on action module 166 receiving, from capacity analyzer 164, an indication that AP 142A-1 has insufficient capacity on both a first radio band and a second radio band and receiving, from availability analyzer 164, that there is at least one channel available in the first radio band, action module 166 may generate a recommendation including an indication that a new AP may be added to a cluster associated with AP 142A-1 and configured to operate on the same radio band as AP 142A-1. In another example, based on action module 166 receiving an indication there are many available channels in the first radio band and receiving an indication that AP 142A-1 has insufficient capacity and that APs 142A that are neighbors to AP 142A-1 do not have radios that are eligible for converting to the first radio band (e.g., radios of the neighboring APs 142A are flagged as having insufficient capacity in the second radio band), action module 166 may generate a recommendation including an indication that a new AP may be added to the neighboring APs 142A. In other words, action module 166 may generate a recommendation indicating that an additional AP may be added to a cluster associated with AP 142A-1 to support AP 142A-1 in providing wireless connectivity to client devices 148 when a radio operating on the second radio band is not available within the cluster of APs to be converted to operate on the first radio band. Action module 166 may output the recommendation to admin device 111, for example.

The techniques of this disclosure provide one or more technical advantages and practical applications. For example, the techniques enable automated AP radio configurations to optimize AP channel utilization at a site. NMS 130, according to the techniques described herein, may optimize AP utilization at a site by identifying AP radios of APs at the site that have insufficient capacity or otherwise have high utilization metrics when operating in a current radio band (e.g., at various times of the day such as during peak network consumption hours). By identifying AP radios with insufficient capacity, NMS 130 may identify clusters of APs where client devices may be suffering during network utilization associated with the cluster of APs. NMS 130 may identify a cluster of APs in communication range and with one or more APs that are flagged as having insufficient capacity and/or surplus capacity and determine whether radio band environments associated with the cluster of APs can support radio band conversions of AP radios within the cluster of APs or whether bandwidth allocation associated with the cluster of APs may be adjusted. In this way, NMS 130 may improve customer network experience at a site by configuring bandwidth or radio band operation of AP radios according to customer utilization of the AP radios.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

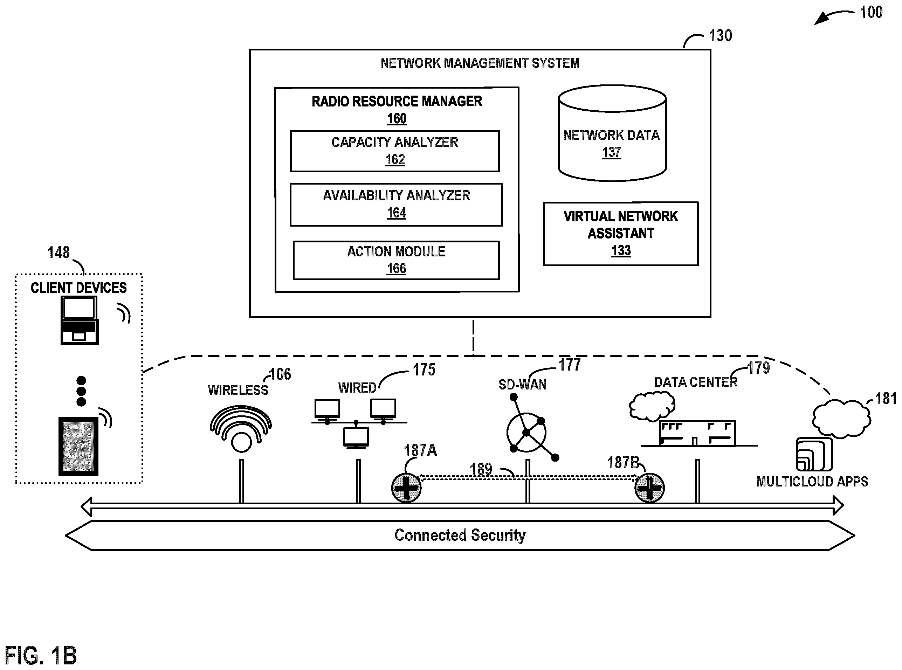

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (WiFi Assurance, Wired Assurance and WAN assurance) spanning from "client," e.g., client devices 148 connected to wireless network 106 and wired LAN 175 (far left of FIG. 1B), to "cloud," e.g., cloud-based application services 181 that may be hosted by computing resources within data centers 179 (far right of FIG. 1B).

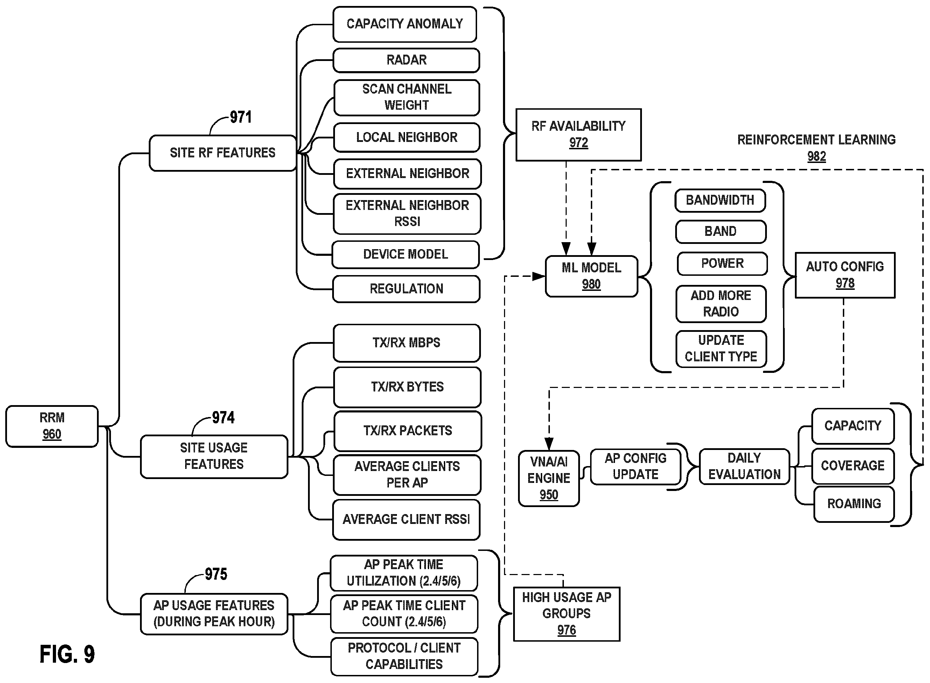

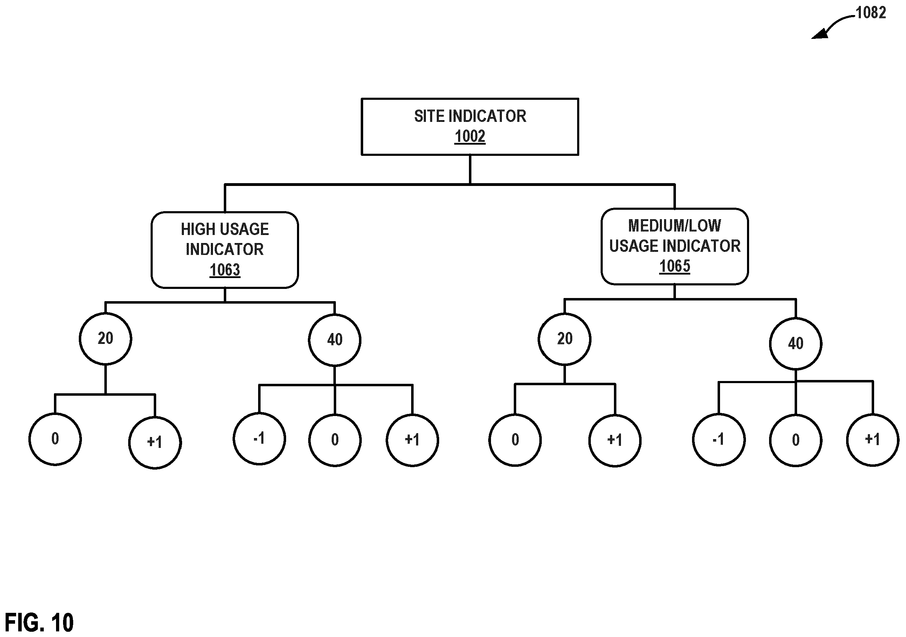

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-driven radio frequency (RF) optimization with reinforcement learning. For example, as described in more details in FIGS. 9 and 10, VNA 133 may implement reinforcement learning techniques for automatic radio configuration determinations. In this way, VNA 133 may adapt to site specific features of a site and/or provide administrators with suggestions to improve or otherwise optimize network device radio configurations at the site.

As illustrated in the example of FIG. 1B, AI-driven NMS 130 also provides configuration management, monitoring and automated oversight of software defined wide-area network (SD-WAN) 177, which operates as an intermediate network communicatively coupling wireless networks 106 and wired LANs 175 to data centers 179 and application services 181. In general, SD-WAN 177 provides seamless, secure, traffic-engineered connectivity between "spoke" routers 187A of wired networks 175 hosting wireless networks 106, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent No. 11,075,824, entitled "IN-LINE PERFORMANCE MONITORING," and issued on July 27, 2021, the entire content of each of which is incorporated herein by reference in its entirety.

In some examples, AI-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in U.S. Patent No. 10,756,983, entitled "Intent-based Analytics," and U.S. Patent No. 10,992,543, entitled "Automatically generating an intent-based network model of an existing computer network," each of which is hereby incorporated by reference.

In accordance with the techniques described in this disclosure NMS 130 may optimize APs 142 of network system 100. RRM 160 of NMS 130 may obtain network data 137 of APs 142 that may indicate utilization of bandwidth over various time periods, connected client devices 148 during various time periods, RSSI between APs 142, or other network data that may indicate capacity and availability of radios of APs 142 within sites 102. RRM 160, or more specifically capacity analyzer 162, may determine capacity values for each radio of each of APs 142 at one of sites 102. Capacity analyzer 162 may, based on the capacity values for each radio, determine whether a radio of an AP operating at a first radio band has surplus or insufficient capacity to handle client devices 148 connected to the AP on the first radio band throughout various times. RRM 160, or more specifically availability analyzer 164, may determine an availability of channels within the first radio band associated with a cluster of APs 142 at the one of sites 102. For example, availability analyzer 164 may determine an availability of channels within the first radio band associated with a cluster of APs 142 that includes at least one AP that capacity analyzer 162 flagged as having insufficient capacity. RRM 160, or more specifically action module 166, may perform an action based on capacity values determined by capacity analyzer 162 and availability determined by availability analyzer 164. For example, action module 166 may perform an action of converting a radio of an AP of APs 142 from operating on a second radio band to operate on the first radio band based on a capacity value for the AP indicating the AP has insufficient capacity on the first radio band and a determination that there is at least one available channel within the first radio band associated with the cluster of APs associated with the AP.

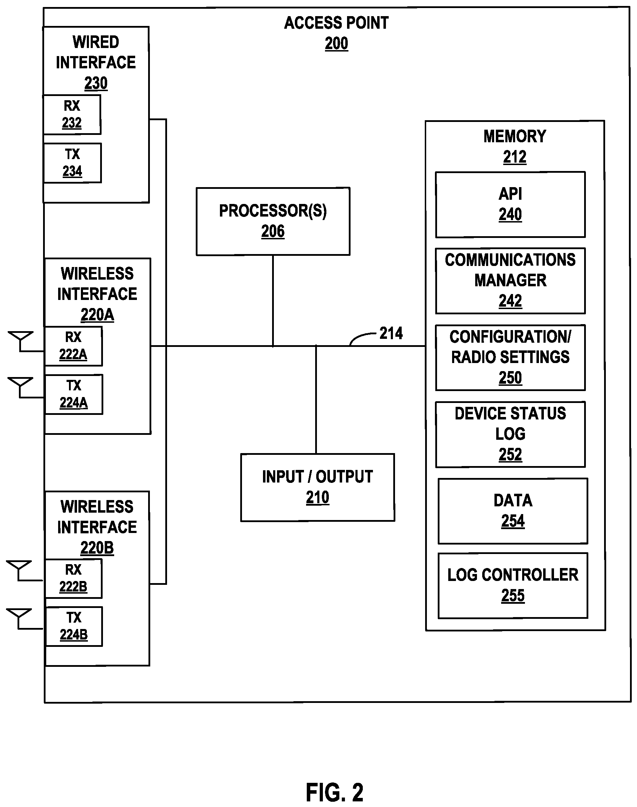

FIG. 2 is a block diagram of an example access point (AP) device 200, in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B one or more processor(s) 206, memory 212, and input/output 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to a wired network device, such as one of switches 146 of FIG. 1A, within the wired network via a cable, such as an Ethernet cable.

First and second wireless interfaces 220A and 220B represent wireless network interfaces (e.g., radio interfaces of two or more radios) and include receivers 222A and 222B, respectively, each including a receive antenna via which access point 200 may receive wireless signals from wireless communications devices, such as UEs 148 of FIG. 1A. First and second wireless interfaces 220A and 220B further include transmitters 224A and 224B, respectively, each including transmit antennas via which access point 200 may transmit wireless signals to wireless communications devices, such as UEs 148 of FIG. 1A. In some examples, first wireless interface 220A may include a Wi-Fi 802.11 interface (e.g., 2.4 GHz, 5 GHz, 6GHz, and/or 60GHz) and second wireless interface 220B may include a Bluetooth interface and/or a Bluetooth Low Energy (BLE) interface. Wireless interface 220A may include a radio interface that enables radios of wireless interface 220A to operate in two or more radio bands (e.g., dual-band, tri-band, etc.). AP device 200, in accordance with the techniques described herein, may receive instructions to convert operation of wireless interface 220A, for example, to a different radio band.

Processor(s) 206 are programmable hardware-based processors configured to execute software instructions, such as those used to define a software or computer program, provided from a computer-readable medium (such as memory 212, wired interface 230, or wireless interface 220), such as computer-readable storage mediums including a storage device (e.g., a disk drive, or an optical drive) or a memory (such as Flash memory or RAM) or any other type of volatile or non-volatile memory or any kind of transmission medium, that stores and/or conveys instructions to cause the one or more processors 206 to perform the techniques described herein.

Memory 212 includes one or more devices configured to store programming modules and/or data associated with operation of access point 200. For example, memory 212 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including an application programming interface (API) 240, a communications manager 242, configuration settings 250, a device status log 252, data storage 254, and log controller 255. Device status log 252 includes a list of events specific to access point 200. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 255 determines a logging level for the device based on instructions from NMS 130. Data 254 may store any data used and/or generated by access point 200, including data collected from UEs 148, such as data used to calculate one or more SLE metrics, that is transmitted by access point 200 for cloud-based management of wireless networks 106A by NMS 130.

Input/output (I/O) 210 represents physical hardware components that enable interaction with a user, such as buttons, a display, and the like. Although not shown, memory 212 typically stores executable software for controlling a user interface with respect to input received via I/O 210. Communications manager 242 includes program code that, when executed by processor(s) 206, allow access point 200 to communicate with UEs 148 and/or network(s) 134 via any of interface(s) 230 and/or 220A-220C. Configuration settings 250 include any device settings for access point 200 such as radio settings for each of wireless interface(s) 220A-220C. These settings may be configured manually or may be remotely monitored and managed by NMS 130 to optimize wireless network performance on a periodic (e.g., hourly or daily) basis.

As described herein, AP device 200 may measure and report network data from status log 252 to NMS 130. The network data may comprise event data, telemetry data, and/or other SLE-related data. The network data may include various parameters indicative of the performance and/or status of the wireless network. The parameters may be measured and/or determined by one or more of the UE devices and/or by one or more of the APs in a wireless network. NMS 130 may determine one or more SLE metrics based on the SLE-related data received from the APs in the wireless network and store the SLE metrics as network data 137 (FIG. 1A).

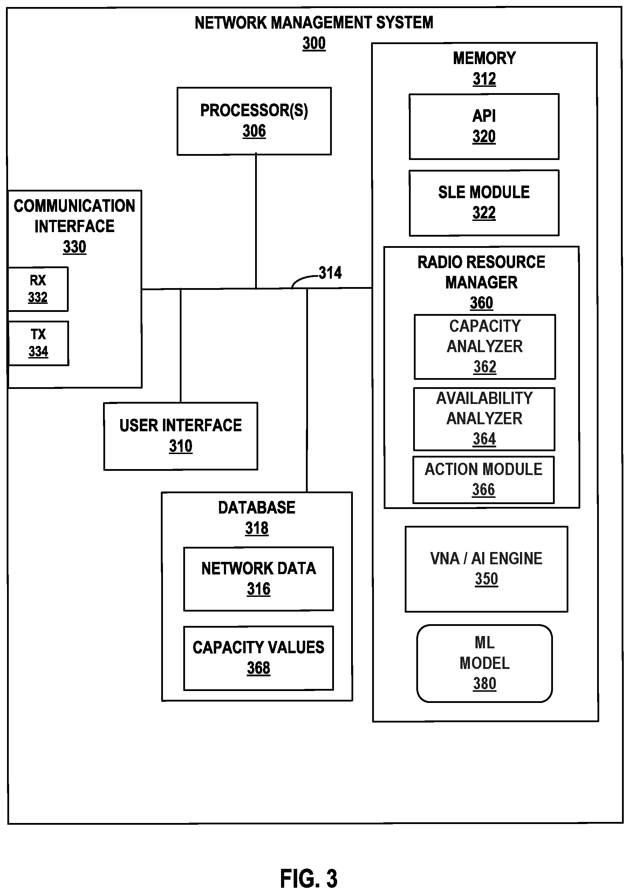

FIG. 3 is a block diagram of an example network management system (NMS) 300, in accordance with one or more techniques of the disclosure. NMS 300 may be used to implement, for example, NMS 130 in FIGS. 1A-1B. In such examples, NMS 300 is responsible for monitoring and management of one or more wireless networks 106A-106N at sites 102A-102N, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of client devices 148, APs 142, switches 146 and other network nodes within network 134, e.g., routers 187 of FIG. 1B, which may be used to calculate one or more SLE metrics and/or update network data 316 in database 318. NMS 300 analyzes this data for cloud-based management of wireless networks 106A-106N. In some examples, NMS 300 may be part of another server shown in FIG. 1A or a part of any other server.

Processor(s) 306 execute software instructions, such as those used to define a software or computer program, provided from a computer-readable medium (such as memory 312 or communications interface 330), such as computer-readable storage mediums including a storage device (e.g., a disk drive, or an optical drive) or a memory (such as Flash memory or RAM) or any other type of volatile or non-volatile memory or any kind of transmission medium, that stores and/or conveys instructions to cause the one or more processors 306 to perform the techniques described herein.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, servers 110, 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not receive, collect, or otherwise have access to network data from the third-party network devices.

The data and information received by NMS 300 may include, for example, telemetry data, SLE-related data, or event data received from one or more of client device APs 148, APs 142, switches 146, or other network nodes, e.g., routers 187 of FIG. 1B, used by NMS 300 to remotely monitor the performance of wireless networks 106A-106N and application sessions from client device to cloud-based application server. NMS 300 may further transmit data via communications interface 330 to any of network devices such as client devices 148, APs 142, switches 146, other network nodes within network 134, admin device 111 to remotely manage wireless networks 106A-106N and portions of the wired network.

Memory 312 includes one or more devices configured to store programming modules and/or data associated with operation of NMS 300. For example, memory 312 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, and a radio resource management (RRM) engine 360. NMS 300 may also include any other programmed modules, software engines and/or interfaces configured for remote monitoring and management of wireless networks 106A-106N and portions of the wired network, including remote monitoring and management of any of APs 142/200, switches 146, or other network devices, e.g., routers 187 of FIG. 1B.

SLE module 322 enables set up and tracking of thresholds for SLE metrics for each network 106A-106N. SLE module 322 further analyzes SLE-related data collected by APs, such as any of APs 142 from UEs in each wireless network 106A-106N. For example, APs 142A-1through142A-N collect SLE-related data from UEs 148A-1through 148A-N currently connected to wireless network 106A. This data is transmitted to NMS 300, which executes by SLE module 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored as, for example, network data 316 in database 318.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., any poor SLE metric(s) indicative of connected issues at one or more network devices. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoking downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

RRM 360, according to the techniques described herein, includes capacity analyzer 362, availability analyzer 364, and action module 366. Capacity analyzer 362 may determine a capacity of radios of APs (e.g., capacity of wireless interface 220A of FIG. 2) and flag APs that may have excessive or insufficient capacity at various times. Availability analyzer 364 may determine an availability of a radio band within a cluster of APs. Action module 366 may perform an action based on outputs of capacity analyzer 362 and availability analyzer 364 to optimize operation of radios of APs within a site.

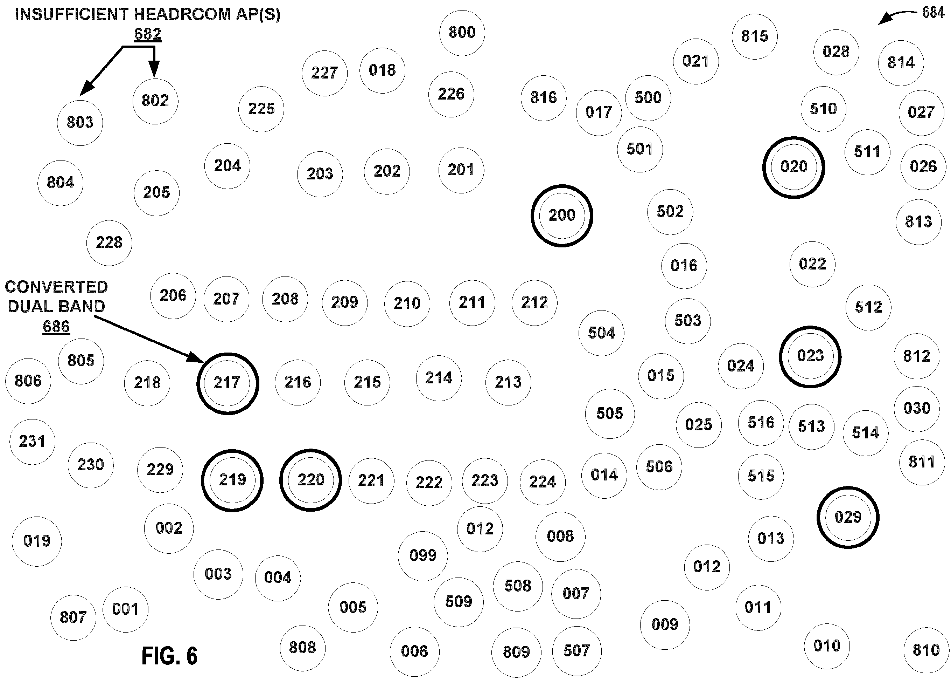

In accordance with one or more techniques of this disclosure, RRM 360 may determine configurations for radios of APs to optimize utilization and performance of the APs within a site. Capacity analyzer 362 of RRM 360 may determine a capacity value for an AP indicating utilization of a radio of the AP operating in a first radio band (e.g., 5 GHz). Capacity analyzer 362 may determine capacity values for each radio band at each AP of a site and store the capacity values as capacity values 368. Capacity analyzer 362 may determine whether the capacity values for the AP radios operating at the radio bands satisfy one or more headroom thresholds. For example, capacity analyzer 362 may determine whether APs have capacity values for radio bands that satisfy first headroom thresholds associated with insufficient capacity or second headroom thresholds associated with surplus capacity. Capacity analyzer 362 may generate, based on network data 316, a headroom map (e.g., example headroom map of FIG. 6) with nodes representing APs within a site that are operating within the first radio band (e.g., 5GHz). Capacity analyzer 362 may generate the headroom map to include flags assigned to the nodes indicating whether the AP has insufficient or surplus capacity for the first radio band. Capacity analyzer 362 may generate the headroom map to include edges that connect the AP nodes that are in communication range (e.g., have RSSI values stored as network data 316 that satisfy a connection strength threshold). Capacity analyzer 362 may output the headroom map to action module 366.

FIG. 6 illustrates example headroom map 684, in accordance with one or more techniques of this disclosure. In the example of FIG. 6, headroom map 684 may represent capacity determinations for APs in a first radio band. Headroom map 684 may include circles with labels (e.g., as illustrated in FIG. 6), dots, or other graphical elements of nodes that each represent an AP with a radio operating on a first radio band (e.g., 5GHz) within a site. Headroom map 684 may include indicators that flag whether a capacity value for the first radio band at the AP satisfies a headroom threshold. For example, headroom map 684 may include indicator "insufficient headroom AP" 682 that indicates that APs labeled as 802 and 803 have insufficient capacity or are otherwise over utilized when operating in the first radio band. Action module 366 may determine whether to convert one or more radios operating on a second radio band in the AP cluster or neighborhood of insufficient headroom APs 682 to operate on the first radio band to provide additional capacity to the AP cluster. Action module 366 may apply availability analyzer 364 to determine that there are no channels available within the first radio band for the AP cluster because there are many neighboring APs (e.g., APs labels with 804, 228, 205, 204, 225, etc.) within the AP cluster that are already assigned the available channels within the first radio band. Based on the determination from availability analyzer 364, action module 366 may not be able to convert radios within the AP cluster of insufficient headroom APs 682 to provide additional capacity, but may reduce the bandwidth of the first radio band at one or more APs within the cluster of APs associated with insufficient headroom APs 682.

Headroom map 684 may also include the indicator of insufficient headroom capacity for APs, indicated as circles with labels, labeled as 217, 219, 220, 200, 020, 023, and 029 and illustrated in FIG. 6 as being surrounded by a circle outline. Action module 366 may apply availability analyzer 364 to determine that APs 217, 219, 220, 200, 020, 023, and 029 are within respective clusters of APs that have available channels in the first radio band. Based on the determination from availability analyzer 364, action module 366 may convert a radio of each of APs 217, 219, 220, 200, 020, 023, and 029 from operating at a second radio band to operate at the first radio band such that each of the APs includes two radios operating at the first radio band. Action module 366 may label APs 217, 219, 220, 200, 020, 023, and 029 that have each been converted to have two radios operate in the first radio band as converted dual band 686.

Action module 366 may analyze the headroom map 684 to optimize AP radio configurations. For example, action module 366 may identify a cluster of APs with radios operating in a first radio band (e.g., 5 GHz) that are within a communication range. Action module 366 may identify the cluster of APs by extracting a portion of the headroom map that is fully connected. In one example, action module 366 may identify APs within the cluster of APs that are assigned flags indicating the radios of the APs have insufficient capacity for the first radio band associated with the headroom map. Action module 366 may apply availability analyzer 364 to determine whether the APs assigned flags indicating the radios of the APs have insufficient capacity at the first radio band may be reconfigured to have other radios of the APs (including radios of flagged APs) operating on a different, second radio band converted to also operate on the first radio band. In other words, action module 366 may apply availability analyzer 364 to determine how many APs and/or which APs that have been assigned flags indicating the radios of the APs have insufficient capacity at the first radio band may be reconfigured to have another radio operate on the first radio band. Availability analyzer 364 may use network data 316 to determine whether there are one or more available channels within the first radio band associated with the cluster of APs. Availability analyzer 364 may send action module 366 an indication of how many channels are available within the first radio band. Availability analyzer 364 may additionally or alternatively send action module 366 an indication of whether reconfiguring APs to the first radio band may cause a coverage hole in the second radio band in which the APs are currently operating.

Action module 366 may determine whether to change the bandwidth of the first radio band for one or more APs within the cluster of APs or to convert radios of one or more APs within the cluster of APs from the second radio band to the first radio band based on the indication received from availability analyzer 364. For example, based on the indication indicating that there are two or more available channels within the first radio band, action module 366 may increase the bandwidth of the first radio band for one or more APs within the cluster of APs. Based on the indication indicating there are no available channels within the first radio band, action module 366 may decrease the bandwidth of the first radio band for one or more APs within the cluster of APs and/or generate a recommendation to reposition the APs to create more available channels that do not interfere within the cluster of APs. Action module 366 may, additionally or alternatively, generate a recommendation to add an AP to the cluster of APs based on action module 366 receiving indications that there are many available channels and that no AP radios within the cluster of APs are eligible to be converted to the first radio band (e.g., radios within the cluster of APs have been flagged as having insufficient capacity with respect to the second radio band, radios within the cluster of APs may cause a coverage hole in the second radio band if converted from the second radio band to the first radio band, etc.) Based on the indication indicating there is at least one available channel within the first radio band, action module 366 may determine which AP of the cluster of APs may be reconfigured to convert a radio operating at the second radio band to operate at the first radio band. Action module 366 may determine which AP to reconfigure based on band weights computed for each of the flagged APs. In some instances, action module 366 may reconfigure a flagged AP to convert a radio operating at the second radio band to operate at the first radio band based on a comparison of a band weight of the flagged AP to band weights of other flagged APs within the cluster of APs.

Action module 366 may determine which AP in communication range with the APs flagged as having radios with insufficient capacity may be reconfigured to the first radio band based on band weights computed for candidate APs within the communication range. For example, action module 366 may compute band weights for each candidate AP within communication range of a flagged AP that is flagged as having a radio with insufficient capacity in a first radio band (e.g., 5 GHz). Action module 366 may determine candidate APs as APs within communication range of the flagged AP and with radios operating in a second radio band (e.g., 2.4GHz) that is different than the first radio band. The candidate APs may include the flagged AP that has a radio operating in the second radio band. Action module 366 may determine band weights, with respect to the second radio band, for radios of the candidate APs. For instance, action module 366 may access capacity values of capacity values 368 for each of the radios of the candidate APs to determine the band weight for the candidate AP radios with respect to the second radio band. In some examples, action module 366 may perform an action of converting a radio of a candidate AP based on a comparison of a band weight for the radio of the candidate AP compared to band weights of other candidate AP radios.

Action module 366 may additionally or alternatively determine whether converting candidate AP radios to operate in the first radio band will cause a coverage hole in the second radio band that the candidate AP radios are currently operating in. Action module 366 may remove candidate AP radios from a set of candidate AP radios that have been determined to create a coverage hole in the second radio band if transitioned to operate in the first radio band. Action module 366 may proceed to convert candidate AP radios operating in the second radio band to operate in the first radio band to support AP radios flagged as having insufficient capacity at the first radio band based on determining the candidate AP radios will not cause a coverage hole associated with the second radio band and will not cause interference within the first radio band (e.g., there are available channels in the AP cluster associated with the first radio band).

In some example, action module 366 may implement determine candidate AP radios based on a determined set of reserved AP radios. Action module 366 may maintain a list of reserved AP radios that may be utilized to operate in various radio bands to support network operation in a way that does not result in coverage holes due to converting AP radios. In some instances, action module 366 may implement machine learning techniques to generate or otherwise identify reserved AP radios for various time in a day and on a daily basis. In this way, action module 366 may dynamically utilize AP radios to support network coverage in a way that avoids coverage holes.

In some examples, ML model 380 may comprise a supervised ML model that is trained, using training data comprising pre-collected, labeled network data received from network devices (e.g., client devices, APs, switches and/or other network nodes), to identify actions action module 366 may take based on outputs of capacity analyzer 362 and availability analyzer 364. For example, ML model 380 may receive feedback or other analytics of AP utilization performance and adjust model parameters to optimize actions taken in response to determined capacity and availability. ML model 380 may evaluate and refine capacity and availability determinations for each radio of each AP at a site to learn how to optimize analysis of configuration determinations for each of the AP radios. In this way, ML model 380 may adapt to learn optimal AP radio configurations for various AP clusters at a site and for various times of the day, week, or year.

The supervised ML model may comprise one of a logistical regression, naïve Bayesian, support vector machine (SVM), or the like. In other examples, ML model 380 may comprise an unsupervised ML model. Although not shown in FIG. 3, in some examples, database 318 may store the training data and VNA/AI engine 350 or a dedicated training module may be configured to train ML model 380 based on the training data to determine appropriate weights across the one or more features of the training data. As described in more detail in FIGS. 9 and 10, VNA/AI engine 350 may iteratively train ML model 380 to output information for automated radio configurations for a site based on site and network device features provided by RRM 360.

The techniques of this disclosure provide one or more technical advantages and practical applications. For example, NMS 300 may optimize radio band channel utilization according to historical and/or real time client device utilization. NMS 300, according to the techniques described herein, may configure AP radios to operate at various radio bands throughout the day based on analyzing capacity metrics of radio band utilization at a site. NMS 300 may configure AP radios of a site to avoid interference or congestion of neighboring APs at the site, while optimizing AP radio utilization at various radio bands. By focusing on areas of a site where client devices may be struggling with network utilization over various radio bands and determining whether APs within the site are available to support APs with insufficient capacity, NMS 300 may improve optimizations of AP radio configurations as well as improve user network experience at the site.

Although the techniques of the present disclosure are described in this example as performed by NMS 300, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

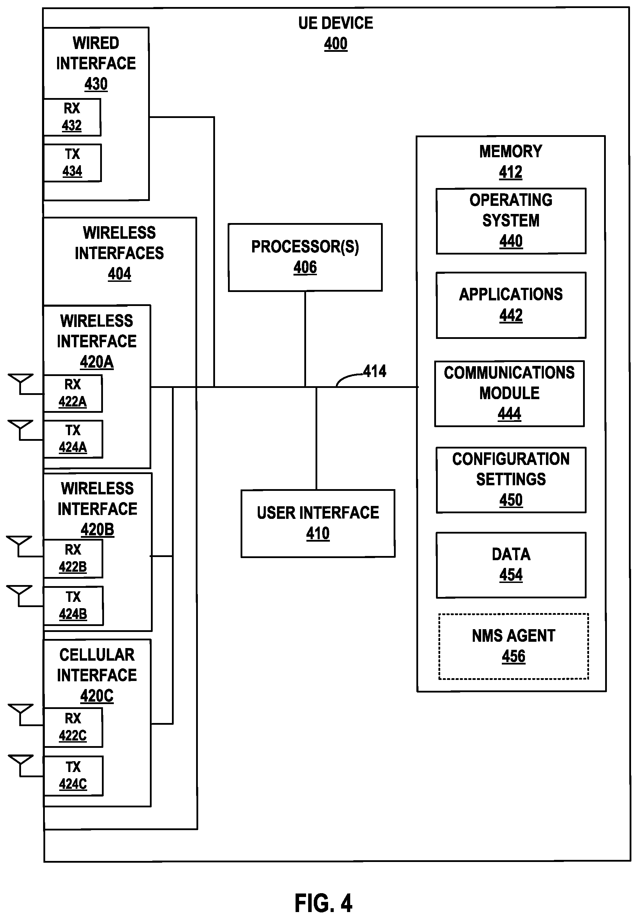

FIG. 4 shows an example user equipment (UE) device 400, in accordance with one or more techniques of this disclosure. Example UE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In some examples, UE 400 may also include a wired client-side device, e.g., an IoT device such as a printer, a security sensor or device, an environmental sensor, or any other device connected to the wired network and configured to communicate over one or more wireless networks.

UE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE 400 to a wired network device, such as one of switches 146 of FIG. 1A, within the wired network via a cable, such as one of Ethernet cables 144 of FIG. 1A.

First, second and third wireless interfaces 420A, 420B, and 420C include receivers 422A, 422B, and 422C, respectively, each including a receive antenna via which UE 400 may receive wireless signals from wireless communications devices, such as APs 142 of FIG. 1A, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE 400 may transmit wireless signals to wireless communications devices, such as APs 142 of FIG. 1A, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program, provided from a computer-readable medium (such as memory 412, wired interface 430, or wireless interface 420), such as computer-readable storage mediums including a storage device (e.g., a disk drive, or an optical drive) or a memory (such as Flash memory or RAM) or any other type of volatile or non-volatile memory or any kind of transmission medium, that stores and/or conveys instructions to cause the one or more processors 206 to perform the techniques described herein.

Memory 412 includes one or more devices configured to store programming modules and/or data associated with operation of UE 400. For example, memory 412 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, and data storage 454. Communications module 444 includes program code that, when executed by processor(s) 406, enables UE 400 to communicate using any of wired interface(s) 430, wireless interfaces 420A-420B and/or cellular interface 450C. Configuration settings 450 include any device settings for UE 400 settings for each of wireless interface(s) 420A-420B and/or cellular interface 420C.

Data storage 454 may include, for example, a status/error log including a list of events specific to UE 400. The events may include a log of both normal events and error events according to a logging level based on instructions from NMS 130. Data storage 454 may store any data used and/or generated by UE 400, such as data used to calculate one or more SLE metrics or identify relevant behavior data, that is collected by UE 400 and either transmitted directly to NMS 130 or transmitted to any of APs 142 in a wireless network 106 for further transmission to NMS 130.

As described herein, UE 400 may measure and report network data from data storage 454 to NMS 130. The network data may comprise event data, telemetry data, and/or other SLE-related data. The network data may include various parameters indicative of the performance and/or status of the wireless network. NMS 130 may determine one or more SLE metrics and store the SLE metrics as network data 137 (FIG. 1A) based on the SLE-related data received from the UEs or client devices in the wireless network.

Optionally, UE device 400 may include an NMS agent 456. NMS agent 456 is a software agent of NMS 130 that is installed on UE 400. In some examples, NMS agent 456 can be implemented as a software application running on UE 400. NMS agent 456 collects information including detailed client-device properties from UE 400, including insight into UE 400 roaming behaviors. The information provides insight into client roaming algorithms, because roaming is a client device decision. In some examples, NMS agent 456 may display the client-device properties on UE 400. NMS agent 456 sends the client device properties to NMS 130, via an AP device to which UE 400 is connected. NMS agent 456 can be integrated into a custom application or as part of location application. NMS agent 456 may be configured to recognize device connection types (e.g., cellular or Wi-Fi), along with the corresponding signal strength. For example, NMS agent 456 recognizes access point connections and their corresponding signal strengths. NMS agent 456 can store information specifying the APs recognized by UE 400 as well as their corresponding signal strengths. NMS agent 456 or other element of UE 400 also collects information about which APs the UE 400 connected with, which also indicates which APs the UE 400 did not connect with. NMS agent 456 of UE 400 sends this information to NMS 130 via its connected AP. In this manner, UE 400 sends information about not only the AP that UE 400 connected with, but also information about other APs that UE 400 recognized and did not connect with, and their signal strengths. The AP in turn forwards this information to the NMS, including the information about other APs the UE 400 recognized besides itself. This additional level of granularity enables NMS 130, and ultimately network administrators, to better determine the Wi-Fi experience directly from the client device's perspective.

In some examples, NMS agent 456 further enriches the client device data leveraged in service levels. For example, NMS agent 456 may go beyond basic fingerprinting to provide supplemental details into properties such as device type, manufacturer, and different versions of operating systems. In the detailed client properties, the NMS 130 can display the Radio Hardware and Firmware information of UE 400 received from NMS client agent 456. The more details the NMS agent 456 can draw out, the better the VNA/AI engine gets at advanced device classification. The VNA/AI engine of the NMS 130 continually learns and becomes more accurate in its ability to distinguish between device-specific issues or broad device issues, such as specifically identifying that a particular OS version is affecting certain clients.

In some examples, NMS agent 456 may cause user interface 410 to display a prompt that prompts an end user of UE 400 to enable location permissions before NMS agent 456 is able to report the device's location, client information, and network connection data to the NMS. NMS agent 456 will then start reporting connection data to the NMS along with location data. In this manner, the end user of the client device can control whether the NMS agent 456 is enabled to report client device information to the NMS.

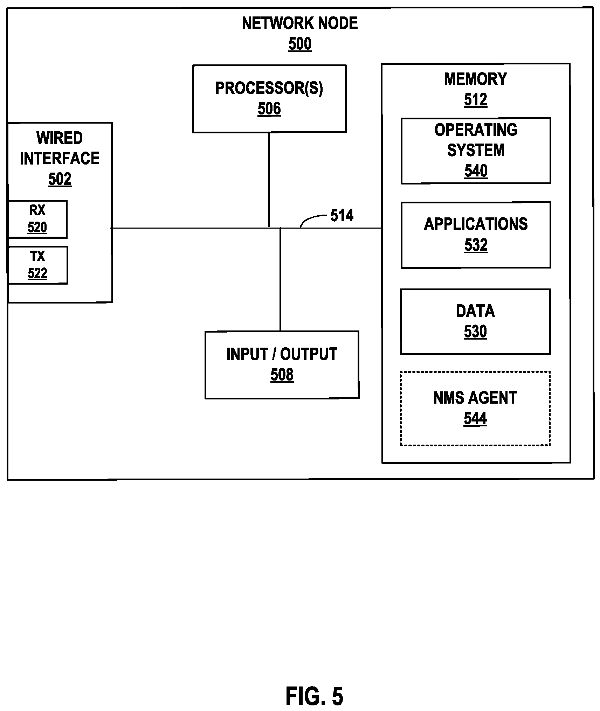

FIG. 5 is a block diagram illustrating an example network node 500, in accordance with one or more techniques of this disclosure. In one or more examples, the network node 500 implements a device or a server attached to the network 134 of FIG.1A, e.g., switches 146, AAA server 110, DHCP server 116, DNS server 122, web servers 128, etc., or another network device supporting one or more of wireless network 106, wired LAN 175, or SD-WAN 177, or data center 179 of FIG. 1B, e.g., routers 187.

In this example, network node 500 includes a wired interface 502, e.g., an Ethernet interface, a processor 506, input/output 508, e.g., display, buttons, keyboard, keypad, touch screen, mouse, etc., and a memory 512 coupled together via a bus 514 over which the various elements may interchange data and information. Wired interface 502 couples the network node 500 to a network, such as an enterprise network. Though only one interface is shown by way of example, network nodes may, and usually do, have multiple communication interfaces and/or multiple communication interface ports. Wired interface 502 includes a receiver 520 and a transmitter 522.

Memory 512 stores executable software applications 532, operating system 540 and data/information 530. Data 530 may include a system log and/or an error log that stores event data, including behavior data, for network node 500. In examples where network node 500 comprises a "third-party" network device, the same entity does not own or have access to both the APs or wired client-side devices and network node 500. As such, in the example where network node 500 is a third-party network device, NMS 130 does not receive, collect, or otherwise have access to the network data from network node 500.

In examples where network node 500 comprises a server, network node 500 may receive data and information, e.g., including operation related information, e.g., registration request, AAA services, DHCP requests, Simple Notification Service (SNS) look-ups, and Web page requests via receiver 520, and send data and information, e.g., including configuration information, authentication information, web page data, etc. via transmitter 522.

In examples where network node 500 comprises a wired network device, network node 500 may be connected via wired interface 502 to one or more APs or other wired client-side devices, e.g., IoT devices. For example, network node 500 may include multiple wired interfaces 502 and/or wired interface 502 may include multiple physical ports to connect to multiple APs or the other wired-client-side devices within a site via respective Ethernet cables. In some examples, each of the APs or other wired client-side devices connected to network node 500 may access the wired network via wired interface 502 of network node 500. In some examples, one or more of the APs or other wired client-side devices connected to network node 500 may each draw power from network node 500 via the respective Ethernet cable and a Power over Ethernet (PoE) port of wired interface 502.

In examples where network node 500 comprises a session-based router that employs a stateful, session-based routing scheme, network node 500 may be configured to independently perform path selection and traffic engineering. The use of session-based routing may enable network node 500 to eschew the use of a centralized controller, such as an SDN controller, to perform path selection and traffic engineering, and eschew the use of tunnels. In some examples, network node 500 may implement session-based routing as Secure Vector Routing (SVR), provided by Juniper Networks, Inc. In the case where network node 500 comprises a session-based router operating as a network gateway for a site of an enterprise network (e.g., router 187A of FIG. 1B), network node 500 may establish multiple peer paths (e.g., logical path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 500, operating as a session-based router, may collect data at a peer path level, and report the peer path data to NMS 130.

In examples where network node 500 comprises a packet-based router, network node 500 may employ a packet- or flow-based routing scheme to forward packets according to defined network paths, e.g., established by a centralized controller that performs path selection and traffic engineering. In the case where network node 500 comprises a packet-based router operating as a network gateway for a site of an enterprise network (e.g., router 187A of FIG. 1B), network node 500 may establish multiple tunnels (e.g., logical path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 500, operating as a packet-based router, may collect data at a tunnel level, and the tunnel data may be retrieved by NMS 130 via an API or an open configuration protocol or the tunnel data may be reported to NMS 130 by NMS agent 544 or other module running on network node 500.

The data collected and reported by network node 500 may include periodically-reported data and event-driven data. Network node 500 is configured to collect logical path statistics via bidirectional forwarding detection (BFD) probing and data extracted from messages and/or counters at the logical path (e.g., peer path or tunnel) level. In some examples, network node 500 is configured to collect statistics and/or sample other data according to a first periodic interval, e.g., every 3 seconds, every 5 seconds, etc. Network node 500 may store the collected and sampled data as path data, e.g., in a buffer.

In some examples, network node 500 optionally includes an NMS agent 544. NMS agent 544 may periodically create a package of the statistical data according to a second periodic interval, e.g., every 3 minutes. The collected and sampled data periodically-reported in the package of statistical data may be referred to herein as "oc-stats." In some examples, the package of statistical data may also include details about clients connected to network node 500 and the associated client sessions. NMS agent 544 may then report the package of statistical data to NMS 130 in the cloud. In other examples, NMS 130 may request, retrieve, or otherwise receive the package of statistical data from network node 500 via an API, an open configuration protocol, or another of communication protocols. The package of statistical data created by NMS agent 544 or another module of network node 500 may include a header identifying network node 500 and the statistics and data samples for each of the logical paths from network node 500. In still other examples, NMS agent 544 reports event data to NMS 130 in the cloud in response to the occurrence of certain events at network node 500 as the events happen. The event-driven data may be referred to herein as "oc-events."

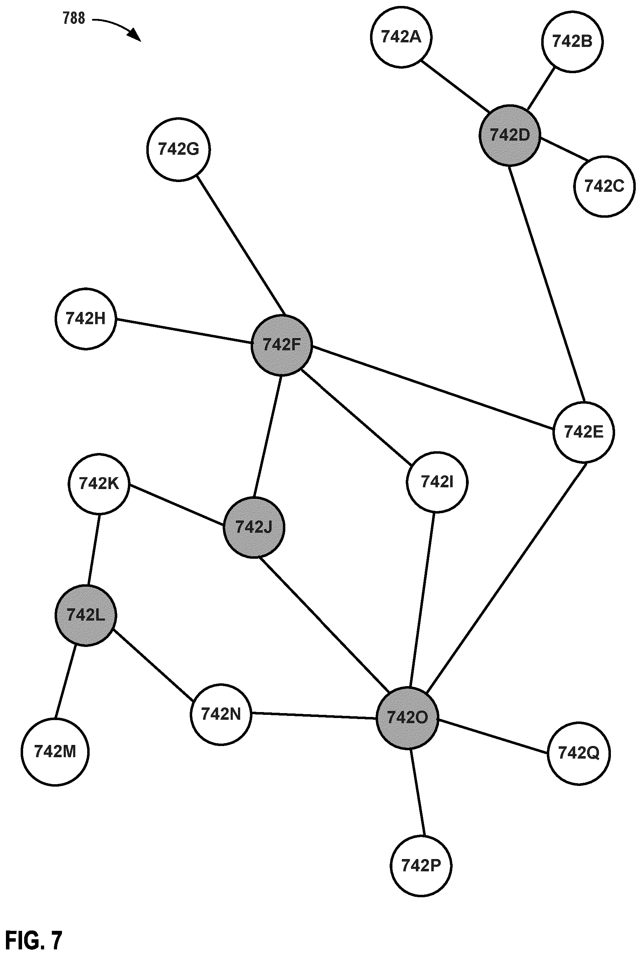

FIG. 7 illustrates an example cluster 788 of APs 742 with example APs 742D, 742F, 742J, 742L, 742O being converted to operate at a different radio band, in accordance with one or more techniques of this disclosure. APs 742 may be an example or alternative implementation of APs 142 of FIG. 1. FIG. 7 may be discussed with respect to FIG. 3 for example purposes only.

RRM 360, or more specifically action module 366, may determine that APs 742D, 742F, 742J, 742L, 742O are eligible to be converted to operate at a different radio band to support APs that are in a communication range with cluster 788, are operating in the different radio band and are flagged (e.g., by capacity analyzer 362) as having insufficient capacity. Action module 366 may determine whether APs 742D, 742F, 742J, 742L, 742O may cause a coverage hole if transitioned to operating at the different radio band. Action module 366 may access coverage values from coverage values 368 that are associated with APs 742 operating in a current radio band to determine whether converting radios of APs 742D, 742F, 742J, 742L, 742O to operate at the different radio band will cause a coverage hole in the current radio band. For example, action module 366 may determine band weights for each of APs 742D, 742F, 742J, 742L, 742O to determine a number of client devices relying on APs 742D, 742F, 742J, 742L, 742O operating in the current radio band. In the example of FIG. 7, action module 366 may determine that converting APs 742D, 742F, 742J, 742L, 742O to operate at the different radio band will not cause a coverage hole because other APs 742 within cluster 788 may provide sufficient coverage at the current radio band to client devices utilizing network resources in cluster 788.

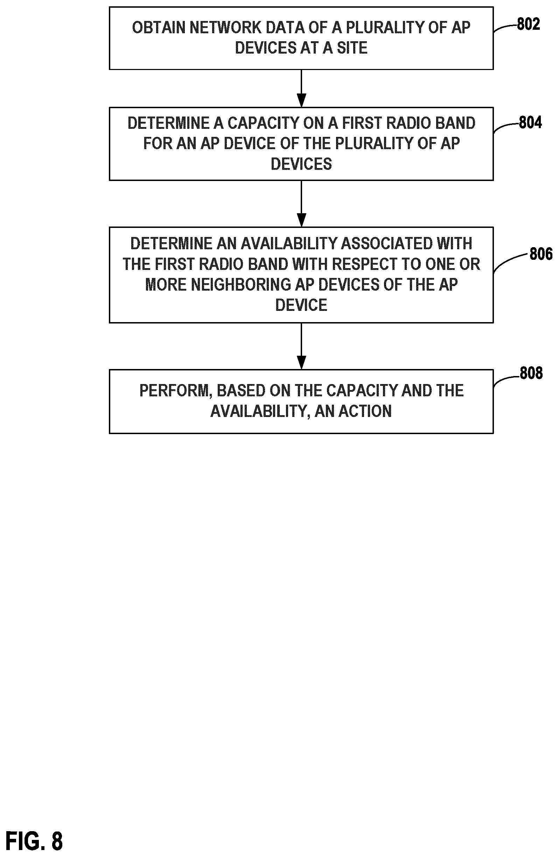

FIG. 8 is a flow chart illustrating an example operation of automated access point radio reconfiguration, in accordance with one or more techniques of this disclosure. FIG. 8 may be discussed with respect to FIG. 3 for example purposes only.

Network management system 300 may obtain network data of a plurality of AP devices at a site (802). For example, network management system 300 may collect network data indicating a utilization associated with radios of AP devices operating in a radio band, a number of client devices connected to the AP devices throughout different periods of time, RSSI values between AP devices, or other utilization metrics associated with the AP devices.

Network management system 300, or more specifically capacity analyzer 362 of RRM 360, may determine a capacity on a first radio band for an AP device of the plurality of AP devices (804). For example, capacity analyzer 362 may determine a capacity for the AP device that includes an indication of remaining capacity on the first radio band. Capacity analyzer 362 may determine the capacity for the AP device to include the indication based on a quantity of traffic sent and received by the AP device and a number of client devices connected to the AP device on the first radio band.

Network management system 300, or more specifically availability analyzer 364 of RRM 360, may determine an availability associated with the first radio band with respect to one or more neighboring AP devices of the AP device (806). For example, availability analyzer 364 may determine an availability associated with the first radio band to include a channel availability associated with the first radio band with respect to the one or more neighboring AP devices of the AP device.

Network management system 300, or more specifically action module 366 of RRM 360, may perform an action based on the capacity and the availability (808). In one example, in instances where the AP device is a first AP device, capacity analyzer 362 may determine a capacity on the first radio band for a second AP device of the one or more neighboring AP devices of the first AP device. Action analyzer 366 may determine to perform the action on the first AP device based on a comparison of the capacity on the first radio band for the second AP device to the capacity on the first radio band for the first AP device. In another example, in instances where the AP device is a first AP device, capacity analyzer 362 may determine a capacity on a second radio band for the first AP device. Action module 366 may compute a weight for the first AP device based on the capacity on the first radio band for the first AP device and the capacity on the second radio band for the first AP device. Action module 366 may determine to perform the action on the first AP device based on a comparison of the weight for the first AP device to a weight for a second AP device of the one or more neighboring AP devices.

Action module 366 may perform a variety of actions based on the capacity on the first radio band for the AP device and the availability associated with the first radio band with respect to one or more neighboring AP devices of the AP device. In one example, action module 366 may increase or decrease a bandwidth of the first radio band for the AP device. For instance, based on the availability associated with the first radio band indicating there are two or more available channels within the first radio band, action module 366 may increase the band width of the first radio band for one or more AP devices within the neighboring AP devices, including the AP device. In another instance, based on the availability associated with the first radio band indicating there are no available channels within the first radio band, action module 366 may decrease the bandwidth of the first radio band for one or more AP devices within the neighboring AP devices, including the AP device.

In another example, action module 366 may convert a radio of the AP device operating at a second radio band to operate at the first radio band. For instance, based on the availability associated with the first radio band indicating there is an available channel on the first radio band that does not interfere within the one or more neighboring AP devices, action module 366 may convert a radio of the AP device operating at a second radio band to operate at the first radio band. In another example, in instances where the AP device is a first AP device and based on the availability associated with the first radio band indicating there is an available channel on the first radio band that does not interfere within the one or more neighboring AP devices, action module 366 may convert a radio of a second AP device of the one or more neighboring AP devices of the first AP device operating in a second radio band to operate in the first radio band. Action module 366 may, additionally or alternatively, apply availability analyzer 164 to determine whether converting the radio of the second AP device to operate in the first radio band may cause a coverage hole in the second radio band.

In another example, action module 366 may output a recommendation to add a new AP device to the plurality of AP devices at the site. For instance, based on the availability associated with the first radio band indicating there are no available channels within the first radio band, action module 366 may output a recommendation to add a new AP device to the plurality of AP devices at the site. In another instance, based on the availability associated with the first radio band indicating there are many (e.g., 2 or more) available channels and based on no radios within the one or more neighboring APs operating in the second radio band being eligible for converting to the first radio band, action module 366 may generate a recommendation indicating that another AP or AP radio may be added to the one or more neighboring APs.

In another example, action module 366 may convert a radio of the AP device operating at a second radio band to operate as a scanning or monitoring radio. For instance, based on the capacity on the first radio band for the AP device indicating that the AP device has surplus or adequate capacity at all radio bands, action module 366 may convert a radio of the AP device to operate as a dedicated scanning or monitoring radio.

FIG. 9 is a conceptual diagram illustrating example radio resource manager (RRM) 960 configured to automatically determine radio configurations 978, in accordance with one or more techniques of this disclosure. RRM 960, ML model 980, and VNA/AI engine 950 of FIG. 9 may be example or alternative implementations of RRM 360, ML model 380, and VNA/AI engine 350 of FIG. 3, respectively.

In the example of FIG. 9, ML 980 may process outputs of RRM 960 (e.g., during offline learning orchestrated by VNA/AI engine 950) to output information used to determine automatic configurations 978. In operation, RRM 960 may obtain site radio frequency (RF) features 971, site usage features 974, and AP usage features 975. RRM 960 may obtain site RF features 971, such as capacity anomaly, radar, scan channel weight, local neighbor, external neighbor, external neighbor received signal strength indicator (RSSI), device model information (e.g., model number, serial number, etc.), regulatory information, or other features associated with radio frequency availability at a site. RRM 960 may process site RF features 971 to determine RF availability 972. For instance, RRM 960 (e.g., availability analyzer 164 of FIG. 1A) may process site RF features 971 to determine RF availability 972 indicating a number of available channels associated with a radio band within a cluster of network devices.

Additionally, or alternatively, RRM 960 may obtain AP usage features 975 such as AP peak time utilization within various radio bands, AP peak time client count for various radio bands, protocol and/or client device capabilities, or other network device usage features that indicate high usage network devices during peak usage hours. RRM 960 may process AP usage features 975 to determine one or more high usage AP groups 976. In general, RRM 960 may process AP usage features 975 to determine high usage AP groups 976 to determine where and/or how many network devices (e.g., on a floor, map, subgroup, number of devices per cluster, etc.) may be needed for automated configuration improvement or other optimization. For example, RRM 960 (e.g., action module 166 of FIG. 1A) may determine one or more band weights or other network device usage weights indicating improved or optimized values for network devices identified as high usage.

During offline learning of ML model 980, RRM 960 may provide RF availability 972 and high usage AP groups 976 to ML model 980. VNA/AI engine 950 may train ML model 980 to process RF availability 972 and/or high usage AP groups 976 to determine features that RRM 960 or a network administrator may process for automatic configurations 978. For instance, ML model 980 may process information of RF availability 972 and/or information of high usage AP groups 976 to predict a bandwidth, band, power, number of radios, client type, or other information that may improve automatic configurations 978. Automatic configurations 978 may include sets of network device configurations at a site that improve or optimize performance according to outputs of ML model 980. In some examples, automatic configurations 978 may include data for graphical user interfaces suggesting that a network administrator of a site add more radios, update a client type, select a reserved AP radio, or otherwise make physical changes to improve performance or otherwise optimize network connectivity at a site.

VNA/AI engine 950 may perform reinforcement learning 982 to improve outputs of ML model 980. For instance, VNA/AI engine 950 may monitor AP or other network device configuration updates made as part of automatic configurations 978. VNA/AI engine 950 may perform a daily evaluation of network device metrics that may be used to tune ML model 980 during reinforcement learning 982. For example, VNA/AI engine 950 may evaluate, during reinforcement learning 982, network device capacity, coverage, roaming, or other network device metrics during peak usage hours to adjust parameters associated with ML model 980 predicting information for automatic configurations 978. In this way, RRM 960 and/or a network administrator may use ML model 980 to continuously output updated information for improving network performance on a site specific level.

Additionally, or alternatively, RRM 960 may obtain site usage features 974. RRM 960 may obtain site usage features such as transmit/receive data (TX/RX) rates (in MBPS), TX/RX size (in bytes), TX/RX packets, average client devices per network device, average client device RSSI, peak TX/RX utilization, peak client device count, or other feature that indicates whether a network device change is needed. For instance, RRM 960 (e.g., capacity analyzer 162 of FIG. 1A) may process site usage features 974 to determine whether there are one or more instances of headroom insufficiency at a site (e.g., during peak hours). RRM 960 may process and/or provide ML model 980 with site usage features 974 to classify sites as, for example, high usage sites, medium usage sites, low usage sites, or other site usage indicators. VNA/AI engine 950 may use classifications of sites during training of ML model 980. For instance, VNA/AI engine 950 may use classification labels for sites to adjust parameters associated with ML model 980 outputting information for automatic configurations 978. As discussed in more detail in FIG. 10, VNA/AI engine 950 may use site classifications to label network devices for reinforcement learning 982.

FIG. 10 is a conceptual diagram illustrating example logic for labeling network devices as part of an example reinforcement learning scheme 1082 associated with a machine learning model predicting information for automated radio configurations, in accordance with one or more techniques of this disclosure. Reinforcement learning scheme 1082 of FIG. 10 may be an example or alternative implementation of reinforcement learning 982 of FIG. 9. FIG. 10 may be discussed with respect to FIG. 9 for example purposes only.

VNA/AI engine 950 may label a network device as part of reinforcement learning scheme 1082 to, for example, indicate interference resulting from radio configurations of the network device. In the example of FIG. 10, VNA/AI engine 950 may label a network device with "20" or "40 and/or "-1," "0," or "+1" based on a determined interference associated with the network device with a particular radio configuration. The value of the label may adjust parameters or other determinations associated with ML model 980 outputting information for automatic configurations 978. For instance, a first network device may be labeled with "20" and "-1" to indicate poor performance of a particular configuration, a second network device may be labeled with "40" and "+1" to indicate positive performance of a particular configuration, a third network device may be labeled with "40" and "0" to indicate a neutral performance, and so on. An aggregated value of a label determined for a network device during a particular configuration may be used to reward, punish, or otherwise adjust parameters during reinforcement learning scheme 1082. In general, VNA/AI engine 950 may apply a rule-based approach to label network devices for reinforcement learning scheme 1082.

In operation, VNA/AI engine 950 may obtain (e.g., from RRM 960) an available channel per network device value. For example, VNA/AI engine 950 may obtain an available channel per network device (e.g., AP) value according to the following equation:

available_channel_per_ap = (configured_channel - interference_impacted_ch - radar_impacted_ch) / (1 + local_ngh + weighted_external_ngh), where available_channel_per_ap (also represented herein as "c") indicates an available channel per network device according to a particular configuration, configured_channel indicates the operational channel of the network device, interference_impacted_ch indicates an interference of a channel impacted by the network device, radar_impacted_ch indicates a radar impact associated with the channel, local _ngh is a local neighbor of the network device, weighted_external_ngh is a weight associated with an external neighbor of the network device.

VNA/AI engine 950 may obtain (e.g., from RRM 960) an interference score associated with a network device with a particular radio configuration. For example, VNA/AI engine 950 may obtain an interference score according to the following equation:

interference_score = f(interference_ch_count) + f(radar_ch_count) + f(capacity_anomaly), where f(interference_ch_count) represents a function of an interference channel count, f(radar_ch_count) represents a function of a radar channel count, and f(capacity_anomaly) represents a function of a capacity anomaly.

VNA/AI engine 950 may obtain (e.g., from RRM 960) a classification indicator for a network device to labeled. For instance, in the example of FIG. 10, VNA/AI engine 950 may obtain a classification indicator for a network device included in a site associated with site indicator 1002. VNA/AI engine 950 may obtain a classification indicator determined based on site usage features 974 associated with the site. Based on obtaining high usage indicator 1063 or obtaining a medium/low usage indicator 1065, VNA/AI engine 950 may determine whether an interference score for the network device satisfies a threshold. Based on VNA/AI engine 950 determining the interference score satisfies the threshold, VNA/AI engine 950 may apply a first label value (e.g., 20 or 40). Based on VNA/AI engine 950 determining the interference score does not satisfy the threshold, VNA/AI engine 950 may apply a second label value (e.g., 40 or 20) that is different than the first label value. Additionally, or alternatively, VNA/AI engine 950 may label network device with label values of "-1," "0," or "+1." For instance, based on a classification indicator and/or one or more thresholds associated with an available channel per network device determination, VNA/AI engine 950 may label network devices with label values of "-1," "0," or "+1."

Therefore, from one perspective, there have been described techniques for a system comprising memory and one or more processors in communication with the memory. The one or more processors may be configured to obtain network data of a plurality of access point (AP) devices at a site. The one or more processors may further be configured to determine a capacity on a first radio band for an AP device of the plurality of AP devices. The one or more processors may further be configured to determine an availability associated with the first radio band with respect to one or more neighboring AP devices of the AP device. The one or more processors may further be configured to perform, based on the capacity and the availability, an action.

Further examples of feature combinations taught by the present disclosure are set out in the following numbered clauses.

Clause 1. A system comprising: memory; and one or more processors in communication with the memory and configured to: obtain network data of a plurality of access point (AP) devices at a site; determine a capacity on a first radio band for an AP device of the plurality of AP devices; determine an availability associated with the first radio band with respect to one or more neighboring AP devices of the AP device; and perform, based on the capacity and the availability, an action.

Clause 2. The system of clause 1, wherein the capacity on the first radio band for the AP device comprises an indication of remaining capacity on the first radio band based on a quantity of traffic sent and received by the AP device and a number of client devices connected to the AP device on the first radio band.

Clause 3. The system of clause 1 or 2, wherein the availability associated with the first radio band comprises a channel availability associated with the first radio band with respect to the one or more neighboring AP devices of the AP device.

Clause 4. The system of clause 1, 2 or 3, wherein the AP device is a first AP device, and wherein the one or more processors are configured to: determine a capacity on the first radio band for a second AP device of the one or more neighboring AP devices of the first AP device; and determine to perform the action on the first AP device based on a comparison of the capacity on the first radio band for the second AP device to the capacity on the first radio band for the first AP device.

Clause 5. The system of any preceding clause, wherein the AP device is a first AP device, and wherein the one or more processors are configured to: determine a capacity on a second radio band for the first AP device; compute a weight for the first AP device based on the capacity on the first radio band and the capacity on the second radio band; and determine to perform the action on the first AP device based on a comparison of the weight for the first AP device to a weight for a second AP device of the one or more neighboring AP devices.

Clause 6. The system of any preceding clause, wherein the action includes increasing or decreasing a bandwidth of the first radio band for the AP device.

Clause 7. The system of any preceding clause, wherein the action includes converting a radio of the AP device operating at a second radio band to operate at the first radio band.

Clause 8. The system of any preceding clause, wherein the action includes outputting a recommendation to add a new AP device to the plurality of AP devices at the site.

Clause 9. The system of any preceding clause, wherein the action includes converting a radio of the AP device operating at a second radio band to operate as a scanning or monitoring radio.

Clause 10. A method comprising: obtaining, by a system, network data of a plurality of access point (AP) devices at a site; determining, by the system, a capacity on a first radio band for an AP device of the plurality of AP devices; determining, by the system, an availability associated with the first radio band with respect to one or more neighboring AP devices of the AP device; and performing, by the system, based on the capacity and the availability, an action.

Clause 11. The method of clause 10, wherein the capacity on the first radio band for the AP device comprises an indication of remaining capacity on the first radio band based on a quantity of traffic sent and received by the AP device and a number of client devices connected to the AP device on the first radio band.

Clause 12. The method of clause 10 or 11, wherein the availability associated with the first radio band comprises a channel availability associated with the first radio band with respect to the one or more neighboring AP devices of the AP device.

Clause 13. The method of clause 10, 11 or 12, wherein the AP device is a first AP device, and wherein the method comprises: determining a capacity on the first radio band for a second AP device of the one or more neighboring AP devices of the first AP device; and determining to perform the action on the first AP device based on a comparison of the capacity on the first radio band for the second AP device to the capacity on the first radio band for the first AP device.

Clause 14. The method of any of clauses 10 to 13, wherein the AP device is a first AP device, and wherein the method comprises: determining a capacity on a second radio band for the first AP device; computing a weight for the first AP device based on the capacity on the first radio band and the capacity on the second radio band; and determining to perform the action on the first AP device based on a comparison of the weight for the first AP device to a weight for a second AP device of the one or more neighboring AP devices.

Clause 15. The method of any of clauses 10 to 14, wherein the action includes increasing or decreasing a bandwidth of the first radio band for the AP device.

Clause 16. The method of any of clauses 10 to 15, wherein the action includes converting a radio of the AP device operating at a second radio band to operate at the first radio band.

Clause 17. The method of any of clauses 10 to 16, wherein the action includes outputting a recommendation to add a new AP device to the plurality of AP devices at the site.

Clause 18. The method of any of clauses 10 to 17, wherein the action includes converting a radio of the AP device operating at a second radio band to operate as a scanning or monitoring radio.

Clause 19. Computer readable media comprising instructions that, when executed, cause one or more processors to: obtain network data of a plurality of access point (AP) devices at a site; determine a capacity on a first radio band for an AP device of the plurality of AP devices; determine an availability associated with the first radio band with respect to one or more neighboring AP devices of the AP device; and perform, based on the capacity and the availability, an action.

Clause 20. The computer readable media of clause19, wherein the capacity on the first radio band for the AP device comprises an indication of remaining capacity on the first radio band based on a quantity of traffic sent and received by the AP device and a number of client devices connected to the AP device on the first radio band.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. A computer-readable medium may also or alternatively comprise a transmission medium by which instructions may be conveyed. A computer-readable transmission medium may include carrier waves, transmission signals or the like. A computer-readable transmission medium may convey instructions between components of a single computer system and/or between plural separate computer systems.

In some examples, a computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

**Claims**

1. A system comprising:

   memory; and
   one or more processors in communication with the memory and configured to:

      obtain network data of a plurality of access point, AP, devices at a site;
      determine a capacity on a first radio band for an AP device of the plurality of AP devices;
      determine an availability associated with the first radio band with respect to one or more neighboring AP devices of the AP device; and
      perform, based on the capacity and the availability, an action.

2. The system of claim 1, wherein the capacity on the first radio band for the AP device comprises an indication of remaining capacity on the first radio band based on a quantity of traffic sent and received by the AP device and a number of client devices connected to the AP device on the first radio band.

3. The system of any of claims 1-2, wherein the availability associated with the first radio band comprises a channel availability associated with the first radio band with respect to the one or more neighboring AP devices of the AP device.

4. The system of any of claims 1-3, wherein the AP device is a first AP device, and wherein the one or more processors are configured to:

      determine a capacity on the first radio band for a second AP device of the one or more neighboring AP devices of the first AP device; and
      determine to perform the action on the first AP device based on a comparison of the capacity on the first radio band for the second AP device to the capacity on the first radio band for the first AP device.

5. The system of any of claims 1-4, wherein the AP device is a first AP device, and wherein the one or more processors are configured to:

      determine a capacity on a second radio band for the first AP device;
      compute a weight for the first AP device based on the capacity on the first radio band and the capacity on the second radio band; and
      determine to perform the action on the first AP device based on a comparison of the weight for the first AP device to a weight for a second AP device of the one or more neighboring AP devices.

6. The system of any of claims 1-5, wherein the action includes increasing or decreasing a bandwidth of the first radio band for the AP device.

7. The system of any of claims 1-5, wherein the action includes converting a radio of the AP device operating at a second radio band to operate at the first radio band.

8. The system of any of claims 1-5, wherein the action includes outputting a recommendation to add a new AP device to the plurality of AP devices at the site.

9. The system of any of claims 1-5, wherein the action includes converting a radio of the AP device operating at a second radio band to operate as a scanning or monitoring radio.

**10.** A method comprising:

obtaining, by a system, network data of a plurality of access point, AP, devices at a site;
determining, by the system, a capacity on a first radio band for an AP device of the plurality of AP devices;
determining, by the system, an availability associated with the first radio band with respect to one or more neighboring AP devices of the AP device; and
performing, by the system, based on the capacity and the availability, an action.

**11.** The method of claim 10, further comprising steps corresponding to the functionality recited in any of claims 2-9.

**12.** Computer-readable media comprising instructions that, when executed by one or more programmable processors, cause the one or more programmable processors to perform the method recited by any of claims 10-11.

FIG. 1A

FIG. 1B

**FIG. 2**

**NETWORK MANAGEMENT SYSTEM**
**300**

PROCESSOR(S)
306

MEMORY
312

API
320

SLE MODULE
322

COMMUNICATION
INTERFACE
330

RX
332

TX
334

314

RADIO RESOURCE
MANAGER
360

CAPACITY
ANALYZER
362

AVAILABILITY
ANALYZER
364

ACTION MODULE
366

USER INTERFACE
310

DATABASE
318

NETWORK DATA
316

CAPACITY VALUES
368

VNA / AI ENGINE
350

ML
MODEL
380

**FIG. 3**

## UE DEVICE
## 400

**WIRED INTERFACE 430**

RX 432

TX 434

**WIRELESS INTERFACES 404**

**WIRELESS INTERFACE 420A**

RX 422A

TX 424A

**WIRELESS INTERFACE 420B**

RX 422B

TX 424B

**CELLULAR INTERFACE 420C**

RX 422C

TX 424C

**PROCESSOR(S) 406**

414

**USER INTERFACE 410**

**MEMORY 412**

OPERATING SYSTEM 440

APPLICATIONS 442

COMMUNICATIONS MODULE 444

CONFIGURATION SETTINGS 450

DATA 454

NMS AGENT 456

**FIG. 4**

NETWORK NODE
500

PROCESSOR(S)
506

WIRED
INTERFACE
502

RX
520

TX
522

514

INPUT / OUTPUT
508

MEMORY
512

OPERATING
SYSTEM
540

APPLICATIONS
532

DATA
530

NMS AGENT
544

FIG. 5

INSUFFICIENT HEADROOM AP(S)
682

CONVERTED
DUAL BAND
686

FIG. 6

EP 4 716 281 A1

788

742A

742B

742D

742C

742G

742H

742F

742E

742I

742K

742J

742L

742M

742N

742O

742Q

742P

FIG. 7

```
┌─────────────────────────────────────────┐
│  OBTAIN NETWORK DATA OF A PLURALITY OF AP │──802
│           DEVICES AT A SITE               │
└─────────────────────────────────────────┘
                    │
                    ▼
┌─────────────────────────────────────────┐
│  DETERMINE A CAPACITY ON A FIRST RADIO BAND│──804
│    FOR AN AP DEVICE OF THE PLURALITY OF AP │
│                 DEVICES                    │
└─────────────────────────────────────────┘
                    │
                    ▼
┌─────────────────────────────────────────┐
│  DETERMINE AN AVAILABILITY ASSOCIATED WITH │──806
│  THE FIRST RADIO BAND WITH RESPECT TO ONE OR│
│   MORE NEIGHBORING AP DEVICES OF THE AP    │
│                 DEVICE                     │
└─────────────────────────────────────────┘
                    │
                    ▼
┌─────────────────────────────────────────┐
│  PERFORM, BASED ON THE CAPACITY AND THE   │──808
│           AVAILABILITY, AN ACTION         │
└─────────────────────────────────────────┘
```

**FIG. 8**

REINFORCEMENT LEARNING 982

AUTO CONFIG 978

BANDWIDTH
BAND
POWER
ADD MORE RADIO
UPDATE CLIENT TYPE

CAPACITY
COVERAGE
ROAMING

DAILY EVALUATION

AP CONFIG UPDATE

VNA/AI ENGINE 950

HIGH USAGE AP GROUPS 976

RF AVAILABILITY 972

ML MODEL 980

CAPACITY ANOMALY
RADAR
SCAN CHANNEL WEIGHT
LOCAL NEIGHBOR
EXTERNAL NEIGHBOR
EXTERNAL NEIGHBOR RSSI
DEVICE MODEL
REGULATION

TX/RX MBPS
TX/RX BYTES
TX/RX PACKETS
AVERAGE CLIENTS PER AP
AVERAGE CLIENT RSSI

AP PEAK TIME UTILIZATION (2.4/5/6)
AP PEAK TIME CLIENT COUNT (2.4/5/6)
PROTOCOL / CLIENT CAPABILITIES

971

SITE RF FEATURES

974

SITE USAGE FEATURES

975

AP USAGE FEATURES (DURING PEAK HOUR)

RRM 960

FIG. 9

FIG. 10

EP 4 716 281 A1

Europäisches
Patentamt

European
Patent Office

Office européen
des brevets

**EUROPEAN SEARCH REPORT**

**Application Number**

**EP 25 20 2351**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/396695 A1 (BHUSHAN BHARAT [US] ET AL) 17 December 2020 (2020-12-17) | 1-7,9-12 | INV. H04W24/02 |
| Y | * paragraph [0001] - paragraph [0079] * ----- | 8 | ADD. H04W84/12 |
| Y | US 2023/091127 A1 (LIN MAY ZAR [US] ET AL) 23 March 2023 (2023-03-23) * paragraph [0075] - paragraph [0127] * ----- | 8 | |
| Y | US 2017/325106 A1 (GOLDSMITH ANDREA [US] ET AL) 9 November 2017 (2017-11-09) * paragraph [0040] * ----- | 8 | |

**TECHNICAL FIELDS SEARCHED (IPC)**

H04W

The present search report has been drawn up for all claims

| Place of search | Date of completion of the search | Examiner |
|---|---|---|
| Munich | 21 January 2026 | Koutsopoulou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 2351

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2026

| Patent document cited in search report | Publication date | Patent family member(s) | | Publication date |
|---|---|---|---|---|
| US 2020396695 A1 | 17-12-2020 | CN | 113994743 A | 28-01-2022 |
| | | CN | 117939607 A | 26-04-2024 |
| | | EP | 3984293 A1 | 20-04-2022 |
| | | US | 2020396695 A1 | 17-12-2020 |
| | | WO | 2020251724 A1 | 17-12-2020 |
| US 2023091127 A1 | 23-03-2023 | EP | 4402932 A2 | 24-07-2024 |
| | | US | 2023091127 A1 | 23-03-2023 |
| | | WO | 2023039593 A2 | 16-03-2023 |
| US 2017325106 A1 | 09-11-2017 | TW | 201347571 A | 16-11-2013 |
| | | US | 2013272285 A1 | 17-10-2013 |
| | | US | 2017325106 A1 | 09-11-2017 |
| | | WO | 2013152305 A1 | 10-10-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 25346325
- US 63697152
- US 9832082 B
- US 20210306201 A
- US 10985969 B
- US 10958585 B
- US 10958537 B
- US 10862742 B
- US 9729439 B
- US 9729682 B
- US 9762485 B
- US 9871748 B
- US 9985883 B
- US 10200264 B
- US 10277506 B
- US 10432522 B
- US 11075824 B
- US 10756983 B
- US 10992543 B